# FASCICULE DE BREVET EUROPEEN

(11) **EP 4 551 890 B1**
(45) Date de publication et mention de la délivrance du brevet: **02.09.2026**
(21) Numéro de dépôt: 23738486.2
(22) Date de dépôt: 03.07.2023
(51) Int. Cl.: F28D 9/00, F28F 3/02, F28F 3/04, H01M 10/60, F28D 21/00, H01M 10/613, H01M 10/6556

(54) **DISPOSITIF DE REGULATION THERMIQUE, NOTAMMENT DE REFROIDISSEMENT**
VORRICHTUNG ZUR THERMISCHEN REGELUNG, INSBESONDERE ZUR KÜHLUNG
DEVICE FOR THERMAL REGULATION, IN PARTICULAR FOR COOLING

(30) Priorité: 07.07.2022 FR 2206960
(43) Date de publication de la demande: 14.05.2025
(73) Titulaire: Valeo Electrification, 95892 Cergy Pontoise (FR)
(72) Inventeur: DE-VAULX, Cedric, 78322 Le Mesnil-Saint-Denis Cedex (FR); AZZOUZ, Kamel, 78322 Le Mesnil-Saint-Denis Cedex (FR); ETIENNE, Erwan, 78322 Le Mesnil-Saint-Denis Cedex (FR); LHERMITTE, Jean-Christophe, 78322 Le Mesnil-Saint-Denis Cedex (FR); BLANDIN, Jeremy, 78322 Le Mesnil-Saint-Denis Cedex (FR)
(74) Mandataire: Valeo Powertrain Systems
(86) Numéro de dépôt international: PCT/EP2023/068239
(87) Numéro de publication internationale: WO 2024/008649

(56) Documents cités:
- EP-A2- 2 056 057
- WO-A1-2014/020808
- FR-A1- 3 097 626
- US-A1- 2004 112 571
- US-A1- 2012 090 816

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule, par exemple un véhicule automobile.

Le véhicule peut être de type terrestre, maritime ou aérien.

L'invention concerne notamment des échangeurs thermiques à plaques destinés à la circulation d'un fluide caloporteur, par exemple un fluide réfrigérant ou une eau glycolée, permettant le refroidissement des batteries de véhicules hybrides ou électriques. La première plaque, ou plaque supérieure, qui vient au contact des composants à refroidir, est généralement plane. La seconde plaque, ou plaque inférieure, est une plaque emboutie dans laquelle sont formés des canaux de circulation pour le fluide caloporteur.

De manière connue, pour augmenter les turbulences dans le fluide caloporteur, qui ont pour effet d'augmenter le coefficient d'échange et donc la performance thermique, deux types d'éléments peuvent être utilisés.

Il y a d'abord des éléments appelés « *hard dimples »* en anglais, qui sont des bossages réalisant la liaison entre la plaque inférieure et la plaque supérieure. Ces bossages assurent la liaison mécanique de l'ensemble, tout assurant un niveau minimum de perturbation du liquide de refroidissement. Ces bossages sont robustes d'un point de vue mécanique, mais la performance thermique n'est pas optimisée. En effet, en traversant les canaux de circulation sur toute leur hauteur, les bossages produisent d'importantes pertes de charge sans pour autant créer suffisamment de turbulences pour que l'augmentation de la performance thermique ne compense cette perte de charge.

Il y a encore des éléments appelés « soft *dimples »* en anglais, qui sont des bossages à l'intérieur des canaux de circulation, mais de hauteur plus faible de sorte à être en retrait de la plaque supérieure. Ces bossages ne participent pas à la tenue mécanique des plaques de refroidissement mais assure un niveau important de turbulence dans le fluide. La demande de brevet DE102014202161 décrit de tels bossages. EP-A-2056057 divulgue un dispositif de régulation thermique comportant un réseau de circulation pour un fluide caloporteur, ce réseau comprenant au moins une zone de séparation de fluide agencée pour séparer un écoulement de fluide en plusieurs écoulements séparés, au moins une zone de mélange de fluide dans laquelle plusieurs écoulements séparés de fluide débouchent.

L'invention vise à améliorer l'homogénéité en température du fluide caloporteur circulant dans le réseau de circulation.

L'invention propose ainsi un dispositif de régulation thermique tel que défini dans la revendication 1.

Dans le réseau de circulation de fluide caloporteur, une couche pariétale de fluide, qui est sur ou à proximité d'une paroi d'échange thermique, est davantage chauffée qu'une couche interne, qui est plus éloignée de cette paroi. La couche interne et la couche pariétale se prolongent l'une l'autre de manière plus ou moins continue en termes de température.

Dans l'invention, le gradient de température au sein d'une section transversale de fluide est plus grand en amont de la zone de mélange, et plus faible dans la zone de mélange. Le mélange vise à atténuer, voire supprimer, ce gradient de température au sein du fluide.

L'invention permet de mélanger efficacement des couches pariétales de fluide et des couches internes de fluide. Les angles précités sont choisis de sorte que toutes les couches se mélangent. Un angle d'incidence trop faible entre les écoulements de fluide ne permet pas de mélanger efficacement les couches car ces flux seraient alors « trop tangents » l'un à l'autre.

L'invention permet ainsi d'homogénéiser la température du fluide sur toute la section transversale de l'écoulement, à savoir sur la paroi et au centre de l'écoulement. Le fluide peut ainsi présenter une température plus faible sur la paroi qui joue le rôle d'interface thermique de sorte à offrir un meilleur échange thermique avec le composant à refroidir.

Dans la présente invention, le mélange peut se faire à relativement faibles vitesses du fluide, mélange qui est de type chaotique grâce aux angles choisis pour les deux écoulements qui débouchent dans la zone de mélange. Le principe de mélange chaotique est notamment utilisé pour le mélange de fluides visqueux à faibles vitesses. De manière connue, le mélange chaotique est basé sur la "transformation du boulanger" pour le mélange des différentes couches de fluide. Par exemple, selon une manière de faire cette transformation, les couches de fluide subissent une division passive, puis une rotation dans des coudes de chiralités différentes, et enfin la recombinaison pour obtenir un étirement et un repliement pour assurer un mélange homogène.

Dans l'invention, le mélange n'est pas nécessairement turbulent si la vitesse, ou le nombre de Reynolds, ne dépasse pas un certain seuil. L'invention peut ainsi permettre un mélange à faible vitesse ou à faible nombre de Reynolds, typiquement à nombre de Reynolds Re inférieur à 2000, notamment compris entre 100 et 1 400. Ceci est particulièrement avantageux lorsque le dispositif de régulation thermique fonctionne avec des vitesses d'écoulement de fluide insuffisantes pour générer des écoulements turbulents.

L'invention permet de mélanger les couches de fluide sans générer des pertes de charges excessives, à la différence notamment de turbulences qui sont sources de grandes pertes de charge.

Selon l'un des aspects de l'invention, l'angle d'incidence entre les deux écoulements de fluide débouchant dans la zone de mélange est compris entre 45° et 90°, ou entre 70° et 90°. L'angle peut être égal à 90°.

Selon l'un des aspects de l'invention, le réseau de circulation comprend :
- une zone de séparation de fluide agencée pour séparer un écoulement de fluide en deux écoulements séparés,
- la zone de mélange de fluide dans laquelle les écoulements séparés de fluide débouchent pour permettre le mélange.

Ainsi l'invention permet, grâce à une séparation du flux de fluide puis une recombinaison de ces flux de fluide, de mélanger les différentes couches de fluide dans la zone de mélange.

On comprend que la zone de mélange est différente de la zone de séparation.

Selon l'un des aspects de l'invention, les ajours sont perpendiculaires au sens général d'écoulement du fluide dans le dispositif.

Selon l'un des aspects de l'invention, le canal et l'organe de mélange sont agencés pour définir au moins une zone de séparation (51), de préférence au moins deux zones de séparation, l'au moins une zone de séparation étant agencée pour séparer l'écoulement de fluide en au moins deux flux séparés et, en aval, une zone de mélange dans laquelle les deux flux séparés se mélangent.

Selon l'un des aspects de l'invention, les flux séparés présentent une portion parallèle avant de se rejoindre dans la zone de mélange.

Selon l'un des aspects de l'invention, l'angle d'incidence entre les deux flux de fluide débouchant dans la zone de mélange est compris entre 45° et 90°, l'angle étant notamment défini par rapport à l'axe z, c'est à dire l'axe sécant de façon perpendiculaire les 2 plaques.

Selon l'invention, les flux qui partent de la zone de séparation et qui se regroupent dans la zone de mélange sont conservés, dans ce sens qu'ils ne reçoivent pas de flux additionnels de fluide sur ce chemin entre la zone de séparation et la zone de mélange.

Selon l'un des aspects de l'invention, la somme des sections transversales des flux qui partent séparément de la zone de mélange est sensiblement égale à la section de la zone de mélange.

Selon l'un des aspects de l'invention, la zone de séparation comprend un obstacle placé dans un canal du réseau de circulation, cet obstacle étant agencé pour séparer l'écoulement de fluide en deux flux.

Selon l'un des aspects de l'invention, l'obstacle s'étend sur toute la hauteur du canal.

Selon l'un des aspects de l'invention, l'obstacle est plein, à savoir l'obstacle est différent d'un passage traversant dans le dispositif de régulation thermique.

Selon l'un des aspects de l'invention, l'obstacle est de type ponctuel, à savoir de faibles dimensions par rapport à l'ensemble du réseau de circulation de fluide. Par exemple, la dimension de l'obstacle est égale au plus à une inter-distance entre deux canaux voisins. Cet obstacle n'est pas du type de grandes dimensions, ce qui imposerait à plusieurs canaux du réseau de circulation d'accomplir des virages de contournement.

Dans le cas de plaques, l'obstacle joint les deux plaques inférieure et supérieure.

Selon l'un des aspects de l'invention, l'obstacle est de forme polygonale, notamment sensiblement rectangulaire ou en losange.

Selon l'un des aspects de l'invention, l'obstacle présente des dimensions et forme choisies pour créer des écoulements séparés.

Selon l'un des aspects de l'invention, le canal au sein duquel est placé l'obstacle présente des parois latérales de forme choisie pour participer à la séparation de l'écoulement et, en aval de l'obstacle, à la recombinaison des écoulements dans la zone de mélange.

Selon l'un des aspects de l'invention, les parois latérales du canal présentent chacune un coude, notamment d'angle entre 45° et 90°, pour forcer les écoulements séparés à accomplir des virages, notamment d'angle entre 45° et 90°, autour de l'obstacle.

Selon l'un des aspects de l'invention, l'angle du coude est égal à 90° ou 45°, ou à une valeur entre 90° et 45°.

Selon l'un des aspects de l'invention, le dispositif de régulation thermique comprend une pluralité de canaux côte à côte, notamment étant des symétries par translation les uns des autres, et chaque canal reçoit un ou plusieurs obstacles pour provoquer les séparations et recombinaisons d'écoulements de fluide.

Selon l'un des aspects de l'invention, deux canaux voisins partagent une paroi latérale commune.

Selon l'un des aspects de l'invention, le réseau de circulation de fluide comprend un tronçon d'écoulement de fluide en aval de la zone de mélange, de sorte que le fluide s'écoulant dans ce tronçon d'écoulement de fluide soit de température relativement homogène du fait du mélange dans la zone de mélange.

Selon l'un des aspects de l'invention, le tronçon d'écoulement aval présente une section transversale pour le passage de fluide qui est plus grande, par exemple d'un facteur 2, que chacune des sections transversales des écoulements de fluide séparés.

Par exemple, l'obstacle présente une largeur plus grande que le tiers ou la moitié de la dimension transversale maximale du tronçon aval.

En variante, l'obstacle présente une largeur plus grande que la dimension transversale maximale du tronçon aval.

Ainsi ces obstacles permettent de créer une séparation en deux flux, éventuellement en écoulement laminaire.

Ceci est différent de l'art antérieur qui décrit de petits obstacles (appelés *« dimples »* en anglais) placés dans les canaux pour créer des turbulences, sans former des flux séparés.

Ceci est également différent de l'art antérieur qui propose des canaux se séparant en méandres depuis une entrée de fluide pour se regrouper juste avant de rejoindre une sortie du fluide hors des plaques. Au contraire, dans la présente invention, le fluide qui a subi un mélange chaotique lorsque les canaux se regroupent, sert à refroidir une région dans laquelle se trouvent des composants à refroidir, et le fluide ne quitte pas le dispositif de régulation thermique sans avoir offert des échanges thermiques utiles.

Selon l'un des aspects de l'invention, la zone de séparation comprend deux canaux dans lesquels l'écoulement se divise en deux flux.

Selon l'un des aspects de l'invention, le réseau de circulation comprend une pluralité de motifs élémentaires formés chacun par une zone de séparation de fluide et la zone de mélange qui lui est associée.

Selon l'un des aspects de l'invention, les motifs élémentaires sont tous identiques, notamment alignés suivant des rangées parallèles.

Selon l'un des aspects de l'invention, le motif présente une dimension maximale qui est au moins 20, 15, 10 ou 5 fois plus petite que la dimension maximale du réseau de circulation de fluide.

Autrement dit, ce motif est relativement petit comparé à l'ensemble du réseau de circulation. Ce motif sert principalement à homogénéiser la température du fluide, et non à faire interface de refroidissement avec les composants à refroidir. Le réseau en dehors de ce ou ces motifs joue ce rôle d'interface de refroidissement avec les composants.

Selon l'un des aspects de l'invention, la distance entre les centres de deux motifs successifs correspond à la taille du motif, toutes ces dimensions étant mesurées suivant la même direction.

Selon l'un des aspects de l'invention, le réseau de circulation de fluide comprend un tronçon d'écoulement de fluide en aval de la zone de mélange, de sorte que le fluide s'écoulant dans ce tronçon d'écoulement de fluide soit de température relativement homogène du fait du mélange dans la zone de mélange.

Selon l'un des aspects de l'invention, le composant à refroidir est placé en contact thermique avec le tronçon en aval de la zone de mélange.

Eventuellement le composant n'est pas en regard de la zone de mélange. Ainsi le refroidissement du composant se fait grâce au contact avec le tronçon, en aval de la zone de mélange.

Selon l'un des aspects de l'invention, la longueur de la zone de mélange est plus faible, notamment au moins 2 fois ou 3 fois ou 5 fois plus faible que la longueur du tronçon d'écoulement de fluide en aval, la longueur étant mesurée entre une entrée de fluide et une sortie de fluide de la zone de mélange, respectivement du tronçon.

Les écoulements séparés sont relativement peu écartés. L'écartement est choisi principalement pour permettre une incidence angulaire des flux à mélanger pour permettre un mélange efficace. L'écartement des flux ne vise pas, en premier lieu, à couvrir des surfaces à refroidir, plus ou moins grandes. L'invention prévoit ainsi une ou plusieurs zones de mélange sur un chemin de fluide principal de refroidissement, par exemple qui est globalement rectiligne, pour homogénéiser au mieux la température du fluide au sein de ce chemin principal.

Selon l'un des aspects de l'invention, les écoulements séparés de fluide qui débouchent dans la zone de mélange sont agencés dans un même plan.

En variante, les écoulements séparés de fluide qui débouchent dans la zone de mélange sont agencés dans des plans différents.

Par exemple, le réseau de circulation de fluide s'étend dans un plan principal et l'un au moins des écoulements séparés s'étend, au moins sur une portion, en dehors de ce plan principal.

Par exemple, le dispositif de régulation thermique comprend deux canaux pour les écoulements séparés, ces canaux s'étendant dans deux plans distincts, par exemple deux plans parallèles, et notamment l'un de ces canaux comprend des coudes de raccord sur l'autre des canaux. Le fluide caloporteur circule ainsi d'un plan à l'autre, et présente au moins une portion découlement par exemple perpendiculaire à ces plans. A leur jonction ou recombinaison, les flux séparés se rencontrent suivant un angle permettant leur mélange, par exemple un angle sensiblement égal à 90°. Dans cet exemple de l'invention, le réseau de circulation de fluide utilise des directions d'écoulement dans les trois dimensions de l'espace.

Selon l'un des aspects de l'invention, les flux séparés qui se recombinent dans la zone de mélange sont exactement au nombre de deux.

Selon l'un des aspects de l'invention, le réseau de circulation est formé entre une plaque inférieure et une plaque supérieure.

Selon l'un des aspects de l'invention, l'un des écoulements s'étend, au moins sur une portion, dans une direction de l'épaisseur entre les deux plaques.

Selon l'un des aspects de l'invention, l'une au moins des plaques comprend des régions en relief, notamment des régions embouties, pour former le ou les canaux du réseau et/ou la ou les zones de mélange de fluide.

Selon l'un des aspects de l'invention, les plaques comprennent, toutes les deux, des régions en relief, notamment des régions embouties, pour former ensemble le réseau de circulation de fluide, avec les zones de mélange de fluide.

Dans un autre exemple de mise en œuvre de l'invention, le réseau de circulation de fluide comporte un ou plusieurs tubes au sein desquels circule le fluide caloporteur, et ce ou ces tubes sont agencés pour définir la ou les zones de mélange des écoulements séparés.

Selon l'un des aspects de l'invention, ce ou ces tubes comprennent des obstacles de séparation d'écoulement.

L'invention concerne encore un ensemble comportant un composant susceptible de dégager de la chaleur lors de son fonctionnement, et un dispositif de régulation thermique tel que décrit plus haut, au contact duquel le composant est refroidi.

Selon l'un des aspects de l'invention, le fluide caloporteur est un fluide réfrigérant choisi parmi les fluides réfrigérants R134a, R1234yf ou R744. En variante, le fluide caloporteur est une eau glycolée.

D'autres caractéristiques et avantages de l'invention apparaitront plus clairement à la lecture de la description suivante, donnée à titre d'exemples illustratifs et non limitatifs, et des dessins annexés parmi lesquels :
- la [Figure 1] illustre, schématiquement et partiellement, un dispositif de régulation thermique ;
- la [Figure 2] illustre, schématiquement et partiellement, la disposition des canaux et des obstacles d'un dispositif de régulation thermique selon un exemple de mise en œuvre de l'invention,
- la [Figure 3] illustre, schématiquement et partiellement, une coupe d'un canal de la [Figure 2],
- la [Figure 4] illustre, schématiquement et partiellement, une variante du dispositif de régulation de la [Figure 2],
- la [Figure 5] illustre, schématiquement et partiellement, un autre exemple de mise en œuvre de l'invention,
- la [Figure 6] illustre, schématiquement et partiellement, un autre exemple de mise en œuvre de l'invention.

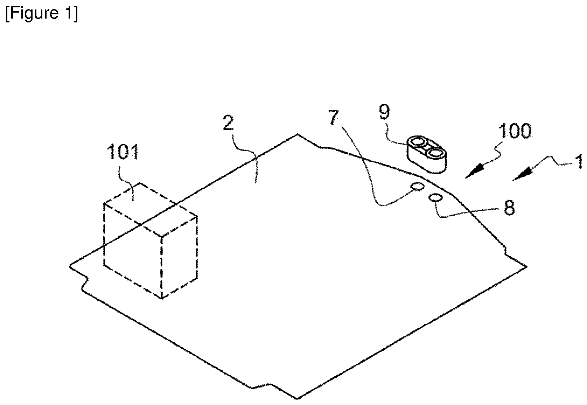

On a représenté sur la figure 1 un ensemble 100 comportant un ensemble de cellules de batterie 101 à refroidir, par exemple disposées suivant une pluralité de rangées parallèles, et un dispositif de régulation thermique 1 agencé pour refroidir les cellules 101, qui sont en contact thermique avec une plaque supérieure du dispositif de refroidissement 1, comme expliqué plus bas.

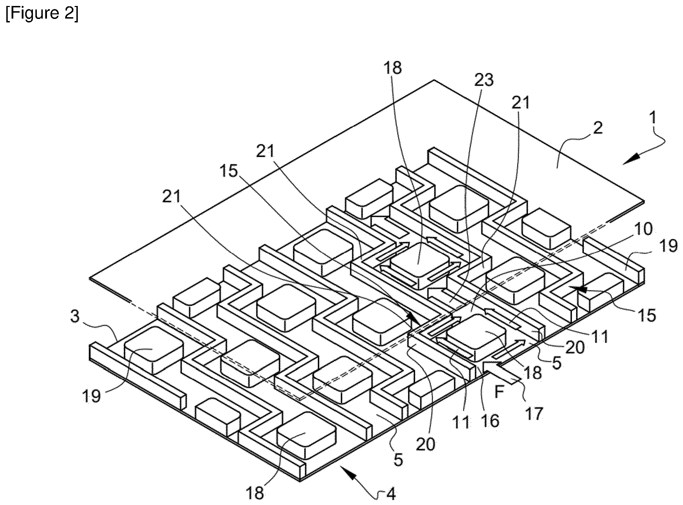

Le dispositif de régulation thermique 1 comporte une plaque supérieure 2 et une plaque inférieure 3 assemblée avec la plaque supérieure 2 pour former ensemble un réseau de circulation 4 formé d'une pluralité de canaux 5 de circulation pour un fluide caloporteur liquide, notamment une eau glycolée, comme mieux visible sur la figure 2.

Le sens de circulation du fluide dans les canaux 5 est matérialisé par des flèches F.

Les canaux 5 sont alimentés en fluide, via une région de distribution de fluide, non représentée, qui communique avec une entrée de fluide 7. Est également prévue une sortie de fluide 8. Une bride 9 peut être connectée à cette entrée 7 et cette sortie 8 pour assurer des raccordements avec un circuit externe de fluide, qui comprend, entre autres, une pompe.

Le réseau de circulation 4 comprenant des zones 10 de mélange de fluide dans chacune desquelles deux écoulements séparés 11 de fluide débouchent suivant des angles respectifs choisis de sorte à générer un mélange d'une couche pariétale 12 de fluide et d'une couche interne 14 de fluide dans la zone de mélange 10.

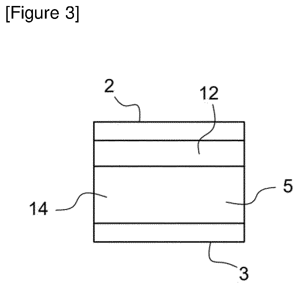

Comme illustré très schématiquement sur la figure 3, dans le réseau 4 de circulation de fluide caloporteur, une couche pariétale 12 de fluide, qui est sur ou à proximité d'une paroi 2 d'échange thermique, est davantage chauffée que la couche interne 14, qui est plus éloignée de cette paroi 2. La couche interne 14 et la couche pariétale 12 se prolongent l'une l'autre de manière continue en termes de température.

Le gradient de température au sein d'une section transversale de fluide est plus grand en amont de la zone de mélange 10, et plus faible dans la zone de mélange 10. Le mélange vise à atténuer, voire supprimer, ce gradient de température au sein du fluide.

L'invention permet ainsi d'homogénéiser la température du fluide sur toute la section transversale de l'écoulement, à savoir sur la paroi 2 et au centre de l'écoulement.

Le mélange peut se faire à relativement faibles vitesses du fluide, mélange qui est de type chaotique grâce aux angles choisis pour les deux écoulements qui débouchent dans la zone de mélange.

Dans l'exemple décrit, l'angle d'incidence entre les deux écoulements de fluide 11 débouchant dans la zone de mélange 10 est de 90°.

On va maintenant décrire plus en détails le réseau de circulation 4.

Le réseau de circulation 4 comprend une pluralité de motifs élémentaires 15 formés chacun par une zone de séparation de fluide 16 et la zone de mélange 10 qui lui est associée.

La zone de séparation de fluide 16 est agencée pour séparer un écoulement de fluide 17 en deux écoulements séparés 11.

La zone de mélange de fluide 10 dans laquelle les écoulements séparés 11 de fluide débouchent permet le mélange.

Ceci permet, grâce à une séparation du flux de fluide puis une recombinaison de ces flux de fluide, de mélanger les différentes couches de fluide dans la zone de mélange10.

Chaque zone de séparation 16 est associé à un obstacle séparateur 18 placé dans un canal 5 du réseau 4 de circulation. L'obstacle 18 est agencé pour séparer l'écoulement de fluide en deux flux.

Les obstacles 18 s'étendent sur toute la hauteur du canal 5.

Chaque obstacle 18 joint les deux plaques inférieure 3 et supérieure 2.

La plaque inférieure 3 comprend des régions embouties 19 qui forment les canaux 5 du réseau 4 et les obstacles 18 associés aux zones de mélange 10.

Dans l'exemple décrit à la figure 2, l'obstacle 18 est de forme rectangulaire avec des coins arrondis.

Chaque canal 5 au sein duquel sont placés les obstacles 18 est délimité par des parois latérales 20 de forme choisie pour participer à la séparation de l'écoulement et, en aval chaque l'obstacle 18, à la recombinaison des écoulements 11 dans la zone de mélange 10.

Les parois latérales 20 du canal présentent une succession de coudes 21 à 90°, pour forcer les écoulements séparés 11 à accomplir des virages à 90°, autour des obstacles 18.

Le réseau de circulation 4 comprend une pluralité de canaux 5 côte à côte, étant des symétries par translation les uns des autres, et chaque canal 5 reçoit plusieurs obstacles 18 pour provoquer les séparations et recombinaisons d'écoulements de fluide, comme on peut le voir sur la figure 2.

Deux canaux 5 voisins partagent une paroi latérale 20 commune.

Le réseau 4 de circulation de fluide comprend un tronçon d'écoulement 23 de fluide en aval de chaque zone de mélange 10, de sorte que le fluide s'écoulant dans ce tronçon d'écoulement de fluide 23 soit de température relativement homogène du fait du mélange dans la zone de mélange.

Le tronçon d'écoulement aval 23 présente une section transversale pour le passage de fluide qui est plus grande, par exemple d'un facteur 2, que chacune des sections transversales des écoulements de fluide séparés 11.

Dans l'exemple décrit, l'obstacle 18 présente une largeur plus grande que la largeur du tronçon aval 23.

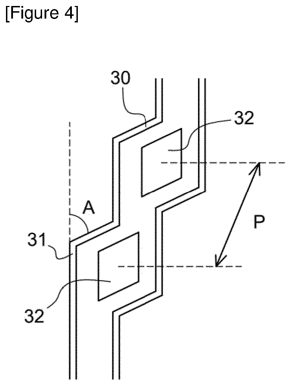

Dans une variante illustrée en figure 4, chaque canal 30 présente des coudes 31, non plus à angle droit, mais avec un angle A plus petit que 90°, par exemple de 70°. Les obstacles 32, identiques, présentent une forme de losange et sont espacés les uns des autres d'un pas constant P. Dans cet exemple, les écoulements séparés se recombinent avec un angle d'incidence A plus petit que 90°, pour limiter la perte de charge.

Il est à noter que les figures 2 à 6 représentent une succession de zones de séparation de fluide et de mélange de fluide rapprochés. Ces figures sont schématiques, et les couples de zones de séparation-mélange, aussi appelés motifs, peuvent être plus éloignées les unes des autres. En effet, la recombinaison permet avantageusement un bien meilleur mélange que ce qui est fait classiquement dans l'art antérieur. Il en résulte qu'une telle recombinaison permet un mélange homogène en aval et permet d'espacer lesdits motifs.

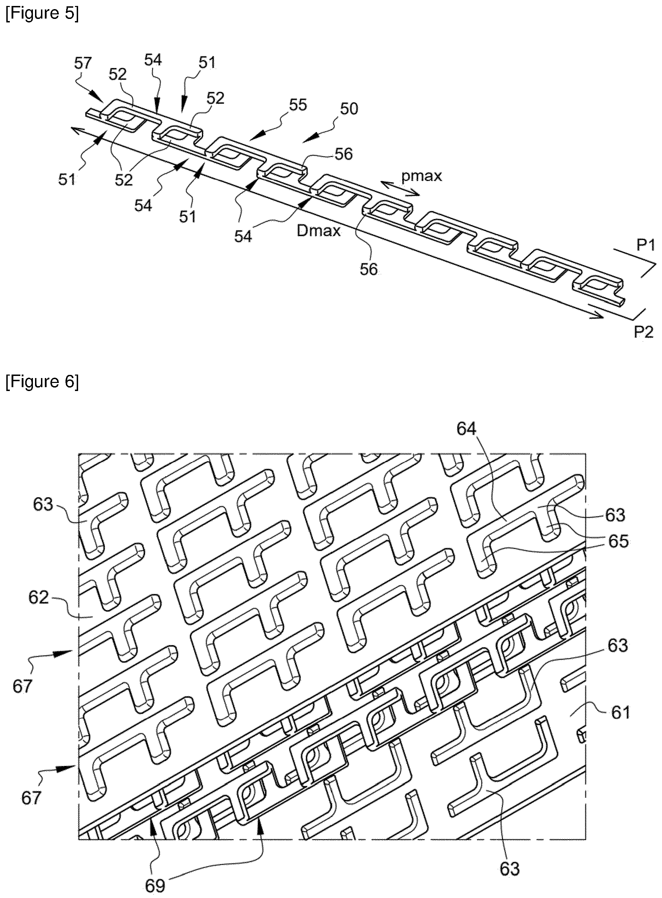

Dans un autre exemple de réalisation de l'invention illustré en figure 5, le réseau de circulation de fluide 50 comprend des zones de séparation 51 successives qui se prolongent chacune vers deux canaux 52 distincts dans lesquels l'écoulement se divise en deux flux. Ces canaux 52 se rejoignent dans des zones de mélange 54 dans lesquelles les flux séparés se recombinent.

Chaque zone de séparation 51, puis les canaux séparés 52 et la zone de mélange 54 forment un motif élémentaire 55. Le réseau de circulation de fluide 50 comprend une succession de tels motifs 55 régulièrement espacés, d'un pas prédéterminé.

Chaque motif 55 présente une dimension maximale pmax, ici mesurée dans la direction longitudinale, qui est au moins 20, 15, 10 ou 5 fois plus petite que la dimension maximale DMax du réseau de circulation de fluide 50, aussi mesurée dans la direction longitudinale. Dans l'exemple décrit, les motifs 55 sont au nombre de dix.

Dans l'exemple décrit, certains écoulements séparés des canaux 52 de fluide qui débouchent dans la zone de mélange 54 sont agencés dans deux plans différents P1 et P2.

Le réseau de circulation de fluide 50 génère des virages d'écoulement 56 passant d'un plan P1 ou P2 à l'autre.

Le fluide caloporteur circule ainsi d'un plan P1 ou P2 à l'autre. A leur jonction ou recombinaison, les flux séparés se rencontrent suivant un angle permettant leur mélange, ici un angle sensiblement égal à 90°. Le réseau de circulation 50 utilise des directions d'écoulement dans les trois dimensions de l'espace.

Dans cet exemple de mise en œuvre de l'invention, le réseau de circulation de fluide comporte des tubes 57 au sein desquels circule le fluide caloporteur, et ces tubes sont agencés pour définir les zones de mélange 54 des écoulements séparés.

On a représenté sur la figure 6 un autre exemple de mise en œuvre de l'invention.

Dans cet exemple, le dispositif de régulation thermique comporte deux plaques 61 et 62 qui présentent des régions en relief 63, ici des régions embouties, pour former ensemble le réseau de circulation de fluide, avec les zones de mélange de fluide. Chaque relief 63 présente un motif avec une branche longitudinale 64 à laquelle se raccordent deux branches transversales 65. Le motif se répète suivant des rangées 67 parallèles sur chacune des plaques 61 et 62. Les motifs de l'une des plaques 61, 62 sont en symétrie miroir des motifs de l'autre plaque 61, 62, et décalés d'une plaque à l'autre par un pas prédéterminé.

Ainsi est formé, entre ces plaques 61 et 62, un réseau de fluide, désigné par la flèche de référence 69.

La figure 6 montre, d'une part, les deux plaques 61 et 62 non encore assemblées, et d'autre part, le réseau de fluide 69 qui sera obtenu.

Le réseau de circulation de fluide obtenu dans le présent exemple, est sensiblement analogue à celui 50 décrit à l'exemple de la figure 5, qui utilise des écoulements dans les trois dimensions de l'espace.

## Revendications

1. Dispositif de régulation thermique (1), notamment de refroidissement, pour composant (101) susceptible de dégager de la chaleur lors de son fonctionnement, notamment pour un module de stockage d'énergie électrochimique, ce dispositif comportant un réseau de circulation (4 ; 50) pour un fluide caloporteur, ce réseau comprenant :
au moins une zone (16 ; 51) de séparation de fluide agencée pour séparer un écoulement de fluide en deux écoulements séparés,
au moins une zone (10 ; 54) de mélange de fluide dans laquelle au moins deux écoulements séparés de fluide (11) débouchent suivant des angles respectifs choisis de sorte à générer un mélange d'une couche pariétale de fluide (12) et d'une couche interne de fluide (14) dans la zone de mélange l'angle d'incidence entre les deux écoulements de fluide (11) débouchant dans la zone de mélange (10) est compris entre 45° et 90°
le réseau de circulation de fluide comprend un tronçon d'écoulement de fluide (23) en aval de la zone de mélange, de sorte que le fluide s'écoulant dans ce tronçon d'écoulement de fluide soit de température relativement homogène du fait du mélange dans la zone de mélange, et le tronçon d'écoulement présente notamment une section transversale pour le passage de fluide qui est plus grande, par exemple d'un facteur 2, que chacune des sections transversales des écoulements de fluide séparés.

2. Dispositif selon la revendication précédente, dans lequel la zone de séparation (16) comprend un obstacle (18) placé dans un canal du réseau de circulation, cet obstacle étant agencé pour séparer l'écoulement de fluide en deux flux.

3. Dispositif selon la revendication précédente, dans lequel l'obstacle (18) s'étend sur toute la hauteur du canal (5), cet obstacle étant notamment de forme polygonale, notamment sensiblement rectangulaire.

4. Dispositif selon l'une des revendications 2 et 3, dans lequel le canal (5) au sein duquel est placé l'obstacle (18) présente des parois latérales (20) de forme choisie pour participer à la séparation de l'écoulement et, en aval de l'obstacle (18), à la jonction des écoulements séparés dans la zone de mélange.

5. Dispositif selon la revendication précédente, dans lequel les parois latérales (20) du canal présentent chacune un coude (21), notamment d'angle entre 45° et 90°, pour forcer les écoulements séparés à accomplir des virages, notamment d'angle entre 45° et 90°, autour de l'obstacle.

6. Dispositif selon l'une des revendications précédentes, dans lequel le réseau de circulation comprend une pluralité de motifs élémentaires (55) formés chacun par une zone de séparation de fluide et la zone de mélange qui lui est associée.

7. Dispositif selon l'une des revendications précédentes, dans lequel les écoulements séparés de fluide qui débouchent dans la zone de mélange sont agencés dans des plans différents (P1, P2).

8. Dispositif selon l'une des revendications précédentes, dans lequel le réseau de circulation (5) est formé entre une plaque inférieure (3) et une plaque supérieure (2).

9. Dispositif selon la revendication précédente, dans lequel l'une au moins des plaques (2 ; 3) comprend des régions en relief, notamment des régions embouties, pour former le ou les canaux du réseau et/ou la ou les zones de mélange de fluide.

10. Dispositif selon l'une des revendications 1 à 7, dans lequel le réseau de circulation de fluide (50) comporte un ou plusieurs tubes (57) au sein desquels circule le fluide caloporteur, et ce ou ces tubes sont agencés pour définir la ou les zones de mélange des écoulements séparés.

11. Ensemble (100) comportant un composant susceptible de dégager de la chaleur lors de son fonctionnement, et un dispositif de régulation thermique (1) selon l'une des revendications précédentes, au contact duquel le composant est refroidi.

## Patentansprüche

1. Thermische Regulierungsvorrichtung (1), insbesondere zur Kühlung, für eine Komponente (101), die während ihres Betriebs Wärme abgeben kann, insbesondere für ein elektrochemisches Energiespeichermodul, wobei diese Vorrichtung ein Zirkulationsnetz (4; 50) für ein Wärmeträgerfluid aufweist, wobei dieses Netz umfasst:
mindestens eine Fluidtrennzone (16; 51), die angeordnet ist, um eine Fluidströmung in zwei getrennte Strömungen zu trennen,
mindestens eine Fluidmischzone (10; 54), in der mindestens zwei getrennte Fluidströmungen (11) unter jeweiligen Winkeln einmünden, die so gewählt sind, dass eine Mischung einer Fluid-Wandschicht (12) und einer Fluid-Innenschicht (14) in der Mischzone erzeugt wird,
wobei der Einfallswinkel zwischen den beiden in die Mischzone (10) einmündenden Fluidströmungen (11) zwischen 45° und 90° liegt,
wobei das Fluidzirkulationsnetz einen Fluidströmungsabschnitt (23) stromabwärts der Mischzone umfasst, sodass das in diesem Fluidströmungsabschnitt fließende Fluid aufgrund der Mischung in der Mischzone eine relativ homogene Temperatur aufweist, und der Strömungsabschnitt insbesondere einen Querschnitt für den Fluiddurchgang aufweist, der größer ist, beispielsweise um einen Faktor 2, als jeder der Querschnitte der getrennten Fluidströmungen.

2. Vorrichtung nach dem vorhergehenden Anspruch, bei der die Trennzone (16) ein Hindernis (18) umfasst, das in einem Kanal des Zirkulationsnetzes platziert ist, wobei dieses Hindernis angeordnet ist, um die Fluidströmung in zwei Ströme zu trennen.

3. Vorrichtung nach dem vorhergehenden Anspruch, bei der sich das Hindernis (18) über die gesamte Höhe des Kanals (5) erstreckt, wobei dieses Hindernis insbesondere eine polygonale, insbesondere im Wesentlichen rechteckige Form aufweist.

4. Vorrichtung nach einem der Ansprüche 2 und 3, bei der der Kanal (5), in dem das Hindernis (18) platziert ist, Seitenwände (20) aufweist, deren Form gewählt ist, um zur Trennung der Strömung beizutragen und, stromabwärts des Hindernisses (18), zur Verbindung der getrennten Strömungen in der Mischzone.

5. Vorrichtung nach dem vorhergehenden Anspruch, bei der die Seitenwände (20) des Kanals jeweils eine Biegung (21) aufweisen, insbesondere mit einem Winkel zwischen 45° und 90°, um die getrennten Strömungen zu zwingen, Kurven zu vollziehen, insbesondere mit einem Winkel zwischen 45° und 90°, um das Hindernis herum.

6. Vorrichtung nach einem der vorhergehenden Ansprüche, bei der das Zirkulationsnetz eine Vielzahl von Grundmustern (55) umfasst, die jeweils aus einer Fluidtrennzone und der ihr zugeordneten Mischzone gebildet werden.

7. Vorrichtung nach einem der vorhergehenden Ansprüche, bei der die getrennten Fluidströmungen, die in die Mischzone einmünden, in verschiedenen Ebenen (P1, P2) angeordnet sind.

8. Vorrichtung nach einem der vorhergehenden Ansprüche, bei der das Zirkulationsnetz (5) zwischen einer unteren Platte (3) und einer oberen Platte (2) gebildet ist.

9. Vorrichtung nach dem vorhergehenden Anspruch, bei der mindestens eine der Platten (2; 3) erhabene Bereiche umfasst, insbesondere geprägte Bereiche, um den oder die Kanäle des Netzes und/oder die Fluidmischzone(n) zu bilden.

10. Vorrichtung nach einem der Ansprüche 1 bis 7, bei der das Fluidzirkulationsnetz (50) ein oder mehrere Rohre (57) aufweist, in denen das Wärmeträgerfluid zirkuliert, und dieses Rohr oder diese Rohre angeordnet sind, um die Mischzone(n) der getrennten Strömungen zu definieren.

11. Anordnung (100), die eine Komponente umfasst, die während ihres Betriebs Wärme abgeben kann, und eine thermische Regulierungsvorrichtung (1) nach einem der vorhergehenden Ansprüche, durch deren Kontakt die Komponente gekühlt wird.

## Claims

1. Thermal regulation device (1), particularly for cooling, for a component (101) likely to release heat during its operation, particularly for an electrochemical energy storage module, this device comprising a circulation network (4; 50) for a heat transfer fluid, this network comprising:
at least one fluid separation zone (16; 51) arranged to separate a fluid flow into two separate flows,
at least one fluid mixing zone (10; 54) in which at least two separate fluid flows (11) discharge at respective angles chosen to generate a mixture of a wall layer of fluid (12) and an internal layer of fluid (14) in the mixing zone
the angle of incidence between the two fluid flows (11) discharging into the mixing zone (10) is between 45° and 90°
the fluid circulation network includes a fluid flow section (23) downstream of the mixing zone, so that the fluid flowing in this fluid flow section is of relatively homogeneous temperature due to the mixing in the mixing zone, and the flow section notably has a cross-section for fluid passage that is larger, for example by a factor of 2, than each of the cross-sections of the separate fluid flows.

2. Device according to the preceding claim, in which the separation zone (16) comprises an obstacle (18) placed in a channel of the circulation network, this obstacle being arranged to separate the fluid flow into two streams.

3. Device according to the preceding claim, in which the obstacle (18) extends over the entire height of the channel (5), this obstacle being particularly of polygonal shape, notably substantially rectangular.

4. Device according to one of claims 2 and 3, in which the channel (5) within which the obstacle (18) is placed has lateral walls (20) of a shape chosen to participate in the separation of the flow and, downstream of the obstacle (18), in the junction of the separated flows in the mixing zone.

5. Device according to the preceding claim, in which the lateral walls (20) of the channel each have a bend (21), particularly with an angle between 45° and 90°, to force the separated flows to make turns, particularly with an angle between 45° and 90°, around the obstacle.

6. Device according to one of the preceding claims, in which the circulation network comprises a plurality of elementary patterns (55) each formed by a fluid separation zone and the mixing zone associated with it.

7. Device according to one of the preceding claims, in which the separated fluid flows that discharge into the mixing zone are arranged in different planes (P1, P2).

8. Device according to one of the preceding claims, in which the circulation network (5) is formed between a lower plate (3) and an upper plate (2).

9. Device according to the preceding claim, in which at least one of the plates (2; 3) comprises relief regions, particularly embossed regions, to form the channel (s) of the network and/or the fluid mixing zone(s).

10. Device according to one of claims 1 to 7, in which the fluid circulation network (50) comprises one or more tubes (57) within which the heat transfer fluid circulates, and this tube or these tubes are arranged to define the mixing zone(s) of the separated flows.

11. Assembly (100) comprising a component likely to release heat during its operation, and a thermal regulation device (1) according to one of the preceding claims, in contact with which the component is cooled.
